# EUROPEAN PATENT APPLICATION

(11) **EP 2 700 700 A1**
(43) Date of publication of application: **26.02.2014**
(21) Application number: 12184206.6
(22) Date of filing: 13.09.2012
(51) Int. Cl.: C10G 1/10, C10L 1/30, F23G 5/00, C10B 53/07, C10L 10/18

(54) **A method for producing fuel and fuel**

(30) Priority: 23.08.2012 PL 40048912
(71) Applicant: Glob Investment Sp. z o.o., 93-479 Lodz (PL)
(72) Inventor: Brocki, Tomasz, 93-479 Lodz (PL)
(74) Representative: Pawlowski, Adam

(57) **Abstract**

A method for manufacturing of fuel for diesel engines in a process of catalytic depolymerisation, wherein a batch material is processed in a separation and evaporation block connected with a mixing turbine wherein catalytic depolymerisation is conducted, and then the depolymerised material is distilled in a distiller to obtain the fuel, wherein part of the obtained fuel is used to supply a combustion-electric generator, characterized in that the batch material is constituted by municipal and/or organic waste, which is sorted to at least two types of waste, which are shredded to a fraction below 10 mm, wherein the calorific value of the wastes is periodically analyzed and on the basis of this analysis the proportions of wastes to be mixed in the mixer are adjusted to obtain an input mixture having a calorific value from 10 MJ/kg to 15 MJ/kg, and then the batch mixture is input to a separation and evaporation block, wherein to the produced fuel there is added a colloidal solution of copper nanoparticles having a particle size from 10 nm to 50 nm in paraffinic, napthene and aromatic hydrocarbons having a boiling temperature from 180 to 350°C in an amount providing concentration of copper nanoparticles in the fuel at the level from 20 ppm to 50 ppm by weight.

## Description

The present invention relates to a method for producing fuel and fuel.

One of innovative technologies of processing of organic and non-organic waste into fuel for compression-ignition (diesel) engine is the technology of catalytic depolymerisation, in short KDV (from German *Katalytische Drucklose Verö*/*ung).*

A German patent no. DE10049377 describes a method for producing fuel for diesel engines in a catalytic depolymerisation process using a catalyst consisting of aluminium silicate with added sodium.

A US patent no. US7473348 describes a method for manufacturing of a fuel for diesel fuels in a catalytic depolymerisation process, whereby hydrocarbon-containing waste is mixed with oil, which is heated using thermal energy obtained from the kinetic energy of oil flow, thus increasing the thermal efficiency of the process.

A US patent application US2007/0131585 describes a method for manufacturing of a fuel for diesel fuels in a catalytic depolymerisation process, where thermal efficiency of the process is increased by using high-speed chamber mixer.

A Polish patent application no. P.389069 describes a method for manufacturing a fuel for diesel engines in a catalytic depolymerisation process, wherein batch material processed in a separation and evaporation block coupled with a mixing turbine, in which the catalytic depolymerisation is performed, and the depolymerised material is distilled in a distilled to obtain fuel for diesel engines, wherein the batch material is subject to preprocessing, wherein the batch material is dried in a dryer until its moisture content is reduced below 30% and the temperature is reduced below 900C, and such prepared material is input to a separation and evaporation block.

A European patent application EP2161299 describes a method for catalytic depolymerisation of waste plastic material, preferably polyolefin waste. Plastic waste is characterized by a relatively high and constant calorific value, therefore the calorific value of the batch material in the invention according to EP2161299 is relatively constant and high and does not need to be further controlled.

It follows from the above-mentioned publications that the technology of producing fuels in the process of catalytic depolymerisation is still subject to improvements, which aim i.a. to reduce the need for energy necessary to conduct the process. These processes are, however, adapted to process batches of a known and relatively constant content and calorific value.

Fuel may contain impurities, such as organic contaminants such as fungi or algae coming from walls of fuel tank, which may obstruct sensitive components of the engine, such as fuel injectors.

The aim of the present invention is to further improve the process of manufacturing fuel from municipal waste and/or organic waste of a variable calorific value in a process of catalytic depolymerisation, in order to efficiently produce fuel having reduced susceptibility to obstruct sensitive components of an engine by organic impurities which may appear in the fuel.

The object of the invention is a method for manufacturing of fuel for diesel engines in a process of catalytic depolymerisation, wherein batch material is processed in a block of separation and evaporation connected with a mixing turbine wherein catalytic depolymerisation is conducted, and then the depolymerised material is distilled in a distiller to obtain the fuel, wherein part of the obtained fuel is used to supply a combustion-electric generator. The batch material is constituted by municipal and/or organic waste, which is sorted to at least two types of waste, which are then shredded to a fraction below 10 mm, wherein the calorific value of the wastes is periodically analyzed and on the basis of this analysis the proportions of wastes to be mixed in the mixer are adjusted to obtain an input mixture having a calorific value from 10 MJ/kg to 15 MJ/kg, and then the mixture is input to a separation and evaporation block, wherein to the produced fuel there is added a colloidal solution of copper nanoparticles having a particle size from 10 nm to 50 nm in paraffinic, naphthenic and aromatic hydrocarbons having a boiling temperature from 180 to 350°C in an amount providing concentration of copper nanoparticles in the fuel at the level from 20 ppm to 50 ppm by weight.

The object of the invention is also fuel obtained by the method according to the invention.

Due to the use of batch input material in form of municipal and/or organic waste and determining the calorific value of the sorted waste, the efficiently of the process of catalytic depolymerisation can be efficiently controlled and the batch having appropriate calorific value can be constantly fed to the system. Furthermore, treatment of fuel is effected in a simple way, by adding appropriate colloidal solution of nanocopper particles in hydrocarbons, which is easily mixable with the produced fuel.

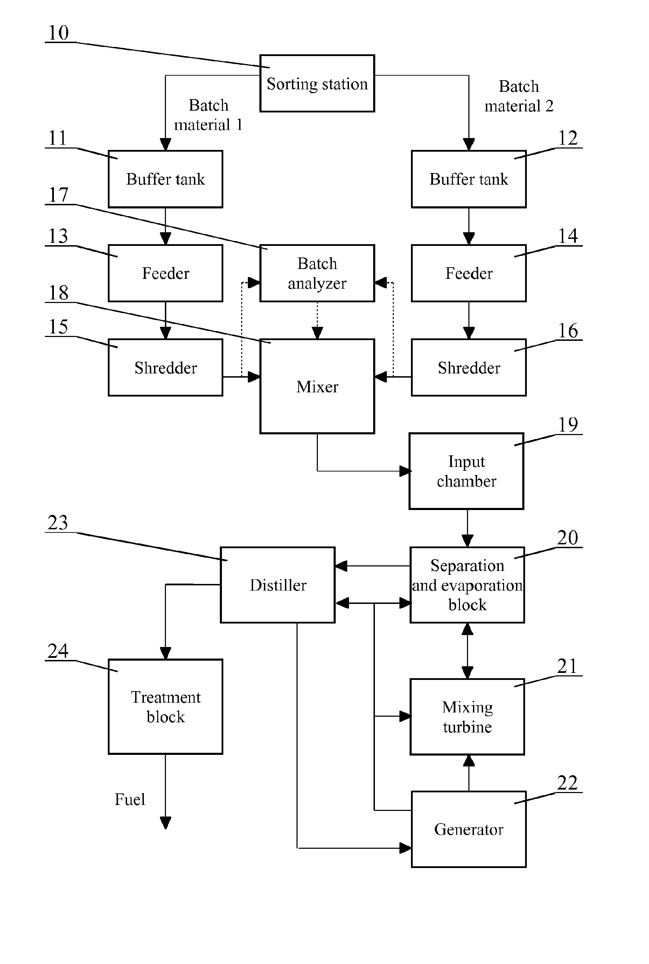

The invention is presented by means of exemplary embodiment on a drawing, in which Fig. 1 presents the diagram of the system of manufacturing fuel.

The batch material, from which according to the invention fuel for diesel engines is obtained, is municipal and/or organic waste.

The waste is sorted in a sorting station 10, wherein they are separated to at least two lines, for example organic waste and non-organic waste. Each type of waste is stored in a separate buffer tank 11, 12. From the buffer tanks 11, 12 the waste is fed by conveyors 13, 14 to shredders 15, 16, in which they are reduced to a small granulation, preferably below 10 mm. The shredded waste of different types are then mixed in a mixer 18 and fed to the following part of the line, including blocks 19-23, where the main process of catalytic depolymerisation is performed.

Samples of material fed from the shredders 15, 16 to the mixer 18 are analyzed in a batch analyzer 17, wherein the calorific value of the samples is analyzed. On the basis of the calorific value of the samples, the proportions of the inputs from the shredders 15, 16 to the crusher are adjusted, so as to obtain a desired calorific value of the material fed to the input chamber 19. This is particularly essential to provide the most optimal process of the catalytic depolymerisation, as the input materials due to their waste character may be characterized by a high variability of the parameters, depending on the place from which waste is collected (and therefore the main components of the waste), level of disintegration or the content of moisture. The analysis of the batch material is performed periodically, for example at the beginning of every working shift or once per day. For example, the proportions of the materials are adjusted to obtain an average calorific value of the batch input to the chamber 19 at the level from 10 to 15 MJ/kg.

In the part of the system comprising the process of catalytic depolymerisation, the material from the input chamber 19 is fed via the separation and evaporation block 20 to a mixing turbine, wherein it is subject to catalytic depolymerisation. During the catalytic depolymerisation, a process of material exchange between the block 20 and the mixing turbine 21 is conducted. The depolymerised material undergoes thermal treatment in the evaporator sector of the block 20 in order to separate water, and then it is distilled in a distiller 23, which outputs fuel. Part of the fuel is transported to a generator 22 comprising a combustion engine powered by the fuel and electric generator, which supplies the blocks 20, 21, 23 with electricity and thermal energy.

The fuel from the distiller 23 is then mixed in a treatment station 24 with a colloidal solution of copper nanoparticles having a diameter from 10nm to 50nm in paraffinic, naphthenic and aromatic hydrocarbons having a boiling temperature from 180 to 350°C in the amount providing the concentration of the copper nanoparticles in fuel at the level from 20 ppm to 50 ppm by weight.

Addition of copper nanoparticles contributes to reducing the friction coefficient, and therefore providing better lubrication of fuel injectors in the engine, therefore possible organic impurities in the fuel can be more easily pushed through sensitive elements of the engine.

For example, as a solution of copper nanoparticles there can be used a product NanoCu 1000W made by Amepox, Lodz, Poland.

## Claims

1. A method for manufacturing of fuel for diesel engines in a process of catalytic depolymerisation, wherein a batch material is processed in a separation and evaporation block connected with a mixing turbine wherein catalytic depolymerisation is conducted, and then the depolymerised material is distilled in a distiller to obtain the fuel, wherein part of the obtained fuel is used to supply a combustion-electric generator, **characterized in that** the batch material is constituted by municipal and/or organic waste, which is sorted to at least two types of waste, which are shredded to a fraction below 10 mm, wherein the calorific value of the wastes is periodically analyzed and on the basis of this analysis the proportions of wastes to be mixed in the mixer are adjusted to obtain an input mixture having a calorific value from 10 MJ/kg to 15 MJ/kg, and then the batch mixture is input to a separation and evaporation block, wherein to the produced fuel there is added a colloidal solution of copper nanoparticles having a particle size from 10 nm to 50 nm in paraffinic, napthene and aromatic hydrocarbons having a boiling temperature from 180 to 350°C in an amount providing concentration of copper nanoparticles in the fuel at the level from 20 ppm to 50 ppm by weight.
